# EUROPÄISCHE PATENTANMELDUNG

(11) **EP 4 660 163 A1**
(43) Veröffentlichungstag der Anmeldung: **10.12.2025**
(21) Anmeldenummer: 24180451.7
(22) Anmeldetag: 06.06.2024
(51) Int. Cl.: C03B 37/012

(54) **POSITIONIERHILFE SOWIE VERFAHREN ZUR HERSTELLUNG EINER HOHLKERNFASER UND EINER VORFORM DAFÜR UNTER EINSATZ DER POSITIONIERHILFE**

(71) Anmelder: Heraeus Quarzglas GmbH & Co. KG, 63450 Hanau (DE)
(72) Erfinder: Rosenberger, Manuel, 63450 Hanau (DE); Plass, Jaqueline, 63450 Hanau (DE); Tansel, Yusuf, 63450 Hanau (DE); Werner, Jörg, 63450 Hanau (DE); Müller, Andreas, 63450 Hanau (DE); Schuster, Kay, 63450 Hanau (DE)
(74) Vertreter: Heraeus IP

(57) **Zusammenfassung**

Ein bekanntes Verfahren zur Herstellung einer Vorform für eine antiresonante Hohlkernfaser umfasst das Bereitstellen eines Hüllrohres, das eine Hüllrohr-Innenbohrung mit einer Hüllrohr-Innenseite und eine Hüllrohr-Mittelachse aufweist, das Bereitstellen einer Vielzahl rohrförmiger Antiresonanzelement-Vorformlinge (kurz: ARE-Vorformlinge), die jeweils eine Rohr-Längsachse und eine Rohr-Außenmantelfläche aufweisen, die Erstpositionierung der ARE-Vorformlinge an peripheren Soll-Positionen der Hüllrohr-Innenseite mittels einer Positionierhilfe unter Bildung einer primären Vorform, und ein thermisches Strecken der primären Vorform zu der Hohlkernfaser oder Weiterverarbeitung der primären Vorform zu einer sekundären Vorform, aus der die Hohlkernfaser gezogen wird. Um hiervon ausgehend eine möglichst exakte Positionierung der ARE-Vorformlinge an vorgegebenen azimutalen Positionen des Hüllrohes zu ermöglichen, wird vorgeschlagen, dass eine Positionierhilfe eingesetzt wird, die mit Justagemitteln ausgestattet ist, die eine gegenüber der Erstpositionierung geänderte Nachpositionierung von mindestens einem Teil der ARE-Vorformlinge ermöglichen.

## Beschreibung

### Technisches Gebiet

Die Erfindung liegt auf dem Gebiet der optischen Fasertechnologie und dabei insbesondere im Bereich der antiresonanten Hohlkernfasern (englisch: "antiresonant hollow-core fibers"- kurz: ARHCF). Der hohle Kernbereich ist von einem inneren Mantelbereich umgeben, in dem sogenannte "antiresonante Elemente" (oder "Antiresonanzelemente"; kurz: "ARE") angeordnet sind. Die um den Hohlkern gleichmäßig verteilten Wandungen der AREs können das auftreffende Licht reflektieren und durch den Faserkern leiten. Hohlkernfasern ermöglichen daher die Lichtführung in einem "hohlen" Kern, der entweder evakuiert oder mit einem Gas (zum Beispiel Luft) gefüllt ist.

Diese Fasertechnologie verspricht eine niedrige optische Dämpfung, ein sehr breites Transmissionsspektrum (auch im UV- oder IR-Wellenlängenbereich) und eine geringe Latenzzeit bei der Datenübertragung. Darüber hinaus eignen sich diese Fasern für spektroskopische Anwendungen sowie zur Übertragung von kurzen Laserpulsen zur Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Insbesondere betrifft die Erfindung ein Verfahren zur Herstellung einer antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl rohrförmiger ARE-Vorformlinge (kurz: ARE-Vorformlinge), die jeweils eine Rohr-Längsachse und eine Rohr-Außenmantelfläche aufweisen,
(c) Erstpositionierung der Vielzahl der ARE-Vorformlinge an peripheren Soll-Positionen der Hüllrohr-Innenseite mittels einer Positionierhilfe unter Bildung einer primären Vorform,
(d) thermisches Strecken der primären Vorform zu der Hohlkernfaser oder Weiterverarbeitung der primären Vorform zu einer sekundären Vorform, aus der die Hohlkernfaser gezogen wird.

Außerdem betrifft die Erfindung ein Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl rohrförmiger ARE-Vorformlinge, die jeweils eine Rohr-Längsachse und eine Rohr-Außenmantelfläche aufweisen,
(c) Erstpositionierung der Vielzahl der ARE-Vorformlinge an peripheren Soll-Positionen der Hüllrohr-Innenseite mittels einer Positionierhilfe unter Bildung einer primären Vorform,
(d) optionale Weiterverarbeitung der primären Vorform zu einer sekundären Vorform.

Darüber hinaus betrifft die Erfindung eine Positionierhilfe zum Einsatz bei der Herstellung einer antiresonanten Hohlkernfaser oder einer Vorform für eine antiresonante Hohlkernfaser, die mindestens ein erstes Justagemittel für eine Erstpositionierung mindestens eines Innenrohres an einer Innenseite mindestens eines Außenrohres aufweist.

### Stand der Technik

Antiresonante Hohlkernfasern werden in der Regel aus Vorformen gezogen. In der Vorform sind die AREs als Ausgangskomponenten oder als Ausgangsstrukturen angelegt, die hier insgesamt als "ARE-Vorformlinge" bezeichnet werden. Diese sind um die Innenseite eines Hüllrohres verteilt. Im einfachsten Fall sind die ARE-Vorformlinge als Rohre (oder Kapillaren) ausgebildet. Andere ARE-Vorformlinge sind aus mehreren, miteinander verschachtelten (englisch: nested) Rohren zusammengesetzt. Beispielsweise enthält eine Vorform für eine Hohlkernfaser mit dem sogenannten NANF-Design (englisch: Nested Antiresonant Nodeless Hollow Core Fibers) mehrere ARE-Vorformlinge, im einfachsten Fall jeweils bestehend aus einem Außenrohr (im Folgenden auch "Primärrohr" genannt) und einem Innenrohr (im Folgenden auch "Sekundärrohr" genannt), das an der Innenseite des Primärrohres angeordnet ist. Bei einem als DNANF-Design (englisch: Double Nested Antiresonant Nodeless Hollow Core Fibers) ist im Sekundärrohr jeweils ein weiteres Innenrohr angeordnet, das auch als "Tertiärrohr" bezeichnet werden kann. Die Sekundär- und Tertiärrohre bilden in der Hohlkernfaser zusätzliche Hohlkanäle, die zu einer Verringerung der optischen Faserdämpfung beitragen, indem sie zu mehrfachen radialen Reflexionen führen und Übergänge oder Knotenpunkte vermeiden, die zu Resonanzen führen.

Beim einfach verschachtelten NANF-Design und beim doppelt verschachtelten DNANF-Design liegt die Kontaktstelle des Sekundärrohres an der Innenseite des Primärrohres, beziehungsweise liegt die Kontaktstelle des Tertiärrohres an der Innenseite des Sekundärrohres jeweils an derselben azimutalen Position (um die Hüllrohrmantelfläche) wie der Kontaktpunkt zwischen dem Primärrohr und dem Hüllrohr. Im Unterschied dazu ist beim sogenannten "ALIF-Design" (englisch: "Antiresonant Leakage Inhibited Fibers") an der Innenseite des Primärrohres ein Paar von Sekundärrohren eingesetzt, die voneinander beabstandet sind und an azimutalen Stellen um den Umfang des Primärrohes befestigt sind, die beide zum peripheren Kontaktpunkt des Primärrohres am Hüllrohr versetzt sind. Zwischen jedem Sekundärrohr-Paar ist somit ein in radialer Richtung offener Spalt vorhanden.

Die zylinderförmigen Ausgangskomponenten, die einen ARE-Vorformling bilden (also beispielsweise das Primär-, Sekundär- und Tertiärrohr), und damit auch jeder ARE-Vorformling weisen eine gewisse Abweichung von der vorgegebenen Sollgeometrie auf. Jeder Schritt der Positionierung und Umformung führt zwangsläufig zu weiteren Geometrieabweichungen, die sich in der Vorform zu einem absoluten Geometriefehler aufsummieren können. Dies stellt hohe Anforderungen an die Genauigkeit beim Positionieren und Fixieren der Ausgangskomponenten an ihren jeweilen Soll-Positionen insbesondere bei kompakten Anordnungen wie beispielsweise beim DNANF- oder beim ALIF-Design.

Zur Verbesserung der Positionierungsgenauigkeit wurden eine Vielzahl von Positionierhilfen vorgeschlagen, wie beispielsweise Abstandshalter und Positionierungsschablonen. In der WO 2019/053412 A1 erfolgt die Positionierung der Primärrohre an vordefinierten peripheren Stellen an der Innenseite des Hüllrohres mit Hilfe von Abstandselementen, die jeweils mit zwei benachbarten Primärrohren in Kontakt sind. Die Hüllrohr-Innenseite kann durch mechanische Bearbeitung so geformt werden, dass die Abstandselemente von der Innenseite radial nach innen ragen.

Die Strukturierung der Hüllrohr-Innenwand zur Erzeugung von Abstandselementen ist zeitintensiv.

In der EP 3 766 847 A1 wird zum Anordnen der ARE-Vorformlinge an der Hüllrohr-Innenseite der Einsatz einer Positionierungsschablone vorgeschlagen, die Halteelemente zur Positionierung der ARE-Vorformlinge an den Soll-Positionen aufweist. Die Positionierungsschablone wird an einem Ende oder an beiden Enden in die Hüllrohr-Innenbohrung eingesetzt.

Aus der JP 2018150184 A ist ein weiteres Verfahren zur Herstellung von Hohlkernfasern mit dem NANF-Design bekannt, bei dem eine Vielzahl von ARE-Vorformlingen bereitgestellt wird, die sich aus miteinander verschachtelten Ausgangskomponenten mit jeweils einem Primärrohr und einem Sekundärrohr zusammensetzen. Zur Anordnung der ARE-Vorformlinge an der Innenseite eines Hüllrohres wird an beiden Enden des Hüllrohres eine zylinderförmige Schablone aus Glas angeschweißt. Diese gewährleistet eine gewisse axiale Führung der ARE-Vorformlinge. In Richtung der Zylinder-Längsachse ist sie zweigeteilt, wobei in ihrem der Hüllrohr-Stirnseite zugewandten vorderen Teil Bohrungen zur Aufnahme der Primärrohre, und in dem hinteren Teil Bohrungen zur Aufnahme der Sekundärrohre vorhanden sind. Die Position der Primärrohre kann zusätzlich stabilisiert werden, indem in die Hüllrohr-Innenbohrung ein zylinderförmiger Inneneinsatz eingesetzt wird, der eine an die Innenkontur der Primärrohr-Anordnung angepasste, zahnradähnliche Außenkontur aufweist.

### Technische Aufgabenstellung

Zur Einhaltung der Resonanz- beziehungsweise Antiresonanzbedingungen sind bereits geringe Maß- und Positionsabweichungen in der Größenordnung der Arbeitswellenlänge des zu führenden Lichts nicht tolerierbar.

Ein Ziel der Erfindung ist es daher, ein Verfahren zur Herstellung einer antiresonanten Hohlkernfaser anzugeben, mit dem eine hohe Präzision der Antiresonanzelemente in der Hohlkernfaser reproduzierbar erreicht werden kann. Insbesondere soll eine möglichst exakte Positionierung der ARE-Vorformlinge an vorgegebenen azimutalen Positionen des Hüllrohes ermöglicht werden.

Darüber hinaus liegt der Erfindung die Aufgabe zugrunde, ein Verfahren zur Herstellung einer Vorform anzugeben, aus der reproduzierbar eine antiresonante Hohlkernfaser mit möglichst exakt positionierten Antiresonanzelementen gezogen werden kann.

Außerdem liegt der Erfindung die Aufgabe zugrunde, eine Positionierhilfe bereitzustellen, die eine möglichst exakte Positionierung von ARE-Vorformlingen in einer primären Vorform ermöglicht.

### Zusammenfassung der Erfindung

Hinsichtlich des Verfahrens zur Herstellung der antiresonanten Hohlkernfaser wird diese Aufgabe durch ein Verfahren mit den Merkmalen von Anspruch 1 gelöst.

Ausgehend von einem Verfahren zur Herstellung der Hohlkernfaser gemäß der eingangs genannten Gattung wird die Maßnahme zur Erstpositionierung der ARE-Vorformlinge an peripheren Soll-Positionen der Hüllrohr-Innenseite ergänzt, indem eine Positionierhilfe eingesetzt wird, die mit Justagemitteln ausgestattet ist, die eine gegenüber der Erstpositionierung geänderte Nachpositionierung von mindestens einem Teil der ARE-Vorformlinge ermöglichen.

Ausgangspunkt für die Herstellung der antiresonanten Hohlkernfaser ist eine Vorform, die hier als "primäre Vorform" bezeichnet wird. Die Herstellung der primären Vorform umfasst üblicherweise den Einbau von ARE-Vorformlingen und deren Anordnung - und optional eine lokale Verbindung - mit der Innenseite des Hüllrohres.

Im Stand der Technik wird für die Erstpositionierung der ARE-Vorformlinge an peripheren Soll-Positionen der Hüllrohr-Innenseite eine starre Schablone eingesetzt. Aufgrund von Maßtoleranzen sowohl bei der Schablone als auch bei den ARE-Vorformlingen enthält die so erhaltene primäre Vorform häufig ungewollte Spielräume und Spalten. Ein Spalt zwischen der Hüllrohr-Innenseite und dem ARE-Vorformling vermindert oder verhindert beispielsweise den Kontakt zwischen diesen Bauteilen. Dadurch entstehen beim anschließenden thermischen Strecken der primären Vorform lokal undefinierte Richtungen der Wirkung der Oberflächenspannung und damit einhergehende ungewollte, unsymmetrische Verformungen, die zum teilweisen oder vollständigen Verlust der Vorform führen können. Dies gilt gleichermaßen für Ausgangskomponenten von verschachtelten ARE-Vorformlingen, wie beispielsweise für einen fehlenden Kontakt zwischen der Primärrohr-Innenseite und einem dort angeordneten Sekundärrohr, beziehungsweise für einen fehlenden Kontakt zwischen der Sekundärrohr-Innenseite und einem dort angeordneten Tertiärrohr. So resultiert im Fall, dass ein ARE-Außenrohr von Anfang an am Hüllrohr anliegt eine andere Verformung als im Fall, dass ein ARE-Außenrohr erst später im Verlauf des thermischen Streckens am Hüllrohr angeschmolzen wird.

Um diesen Nachteil möglichst zu vermeiden, erlaubt die Positionierhilfe der Erfindung eine Nachpositionierung, mittels der ausgehend von der Erstpositionierung des ARE-Vorformlings eine weitere Veränderung von dessen räumlicher Lage ermöglicht wird. Die Positionierhilfe der Erfindung ist insoweit mit "einstellbaren Justagemitteln" ausgestattet. Das einstellbare Justagemittel dient nicht nur der besseren Fixierung des ARE-Vorformlings nach der Erstpositionierung, sondern es ermöglicht auch eine weitere Veränderung von dessen räumlicher Lage. Die Veränderung der räumlichen Lage erfolgt beispielsweise durch Verschieben des ARE-Vorformlings. Das räumliche "Verschieben" individueller ARE-Vorformlinge-insbesondere quer zur jeweiligen Rohr-Längsachse - wird im Folgenden auch als "Feinjustierung" eines ARE-Vorformlings bezeichnet.

Mittels dieser Feinjustierung können einige der ARE-Vorformling und vorzugsweise alle ARE-Vorformlinge der primären Vorform möglichst genau an ihre Soll-Positionen innerhalb der Hüllrohr-Innenbohrung verbracht werden, und zwar auch dann, wenn dies bei der Erstpositionierung nicht exakt gelungen ist.

Bei ARE-Vorformlingen mit ineinander verschachtelten Ausgangskomponenten aus Primärrohr und mindestens einem Sekundärrohr umfasst die Feinjustierung die Verschiebung der räumlichen Lage mindestens des Primärrohres und vorzugsweise auch die Verschiebung von mindestens einem der Sekundärrohre innerhalb der Primärrohr-Innenbohrung.

Bei ARE-Vorformlingen mit ineinander verschachtelten Ausgangskomponenten aus Primärrohr, mindestens einem Sekundärrohr und mindestens einem Tertiärrohr umfasst die Feinjustierung vorzugsweise außerdem die Verschiebung der räumlichen Lage von mindestens einem der Tertiärrohre innerhalb der Sekundärrohr-Innenbohrung.

Infolge der Möglichkeit der Feinjustierung ist die Positionierhilfe nicht starr wie im Stand der Technik, sondern sie ist an die räumlichen Gegebenheiten flexibel oder variabel anpassbar. Dadurch können Maßabweichungen der Positionierhilfe, des Hüllrohres, der ARE-Vorformlinge und gegebenenfalls deren Ausgangskomponenten kompensiert werden. Insbesondere können durch die Feinjustierung ungewollte Spielräume und Spalten zwischen Hüllrohr und ARE-Vorformlingen sowie gegebenenfalls zwischen deren Ausgangskomponenten geschlossen werden. Durch Herbeiführung eines an und für sich gewünschten aber nicht vorhandenen Kontakts zwischen dem Hüllrohr und den ARE-Vorformlingen werden bei einem nachfolgenden thermischen Strecken der primären Vorform möglichst definierte, symmetrische räumliche Verteilungen der Richtung der Wirkung der Oberflächenspannung erreicht und so unbeabsichtigte Verformungen vermieden. Dies gilt bei verschachtelten ARE-Vorformlingen gleichermaßen für den Kontakt zwischen der Innenseite des Primärrohres mit mindestens einem Sekundärrohr, und gegebenenfalls für den Kontakt zwischen der Innenseite eines Sekundärrohres mit mindestens einem Tertiärrohr.

Die Positionierhilfe ist an einem stirnseitigen Ende des Hüllrohres angeordnet, vorteilhafterweise aber an beiden Stirnseiten.

Bei einer bevorzugten Verfahrenseise wird der ARE-Vorformling bei der Nachpositionierung in Richtung quer zu seiner Rohr-Längsachse verschoben.

Die Fixierung und die Veränderung der räumlichen Lage des ARE-Vorformlings beziehungsweise von Ausgangskomponenten desselben umfasst vorteilhafterweise ein Verschieben quer zur Rohr-Längsachse des ARE-Vorformlings. "Quer" bedeutet beispielsweise eine Verschiebung durch Einwirkung einer Kraft, die eine Richtungskomponente aufweist, die mit der Rohr-Längsachse einen Winkel von 45 bis 135 Grad einschließt. Ganz besonders effektiv ist ein Einschließungswinkel um 90 Grad, wobei die Verschiebungs-Kraft in einer Richtung senkrecht zur Rohr-Längsachse wirkt.

Die Verschiebung ist besonders effektiv, wenn die Nachpositionierung durch eine auf den ARE-Vorformling einwirkende Kraft bewirkt wird, die eine senkrecht zur Hüllrohr-Längsachse und radial nach außen gerichtete Richtungskomponente umfasst.

Bei einer weiteren vorteilhaften Verfahrensweise weist die Positionierhilfe eine Längsachse und eine Außenseite auf, und das Justagemittel umfasst eine Vielzahl von Aufnahmen, in die jeweils ein Ende des ARE-Vorformlings hineinragt oder durch die sich ein ARE-Vorformling erstreckt, wobei das Justagemittel außerdem Querbohrungen aufweist, die jeweils von der Außenseite der Positionierhilfe bis zu einer der Aufnahmen verlaufen und durch die hindurch sich ein Andrückelement zur Rohr-Außenmantelfläche des ARE-Vorformlings beziehungsweise von dessen Ausgangskomponenten erstreckt.

Die Vielzahl von Aufnahmen haben beispielsweise eine zylinderförmige Innenkontur, die an die Außenkontur der ARE-Vorformlinge angepasst ist. In jede dieser Aufnahmen ragt jeweils ein Ende eines ARE-Vorformlings hinein oder ein ARE-Vorformling erstreckt sich durch die Aufnahme hindurch. Dies entspricht im Wesentlichen dem aus dem Stand der Technik bekannten Verfahren zur Erstpositionierung. Im Unterschied dazu umfasst das Justagemittel der Erfindung vorzugsweise außerdem Querbohrungen, die von der Außenseite der Positionierhilfe bis zu der jeweiligen Aufnahme verlaufen. Die Querbohrungen haben einen einheitlichen Querschnitt oder sie haben einen Querschnitt, die sich von außen nach innen verjüngt. Die Verjüngung kann als stufenweise Querschnittsverengung ausgeführt sein.

Durch die Querbohrung hindurch erstreckt sich ein Andrückelement, wie zum Beispiel eine Stellschraube, wobei die Querbohrungen gegebenenfalls mindestens teilweise als Gewindebohrungen ausgebildet sind. Das Andrückelement kann an der Rohr-Außenmantelfläche des ARE-Vorformlings anliegen oder es kann gegen die Rohr-Außenmantelfläche des ARE-Vorformlings gedrückt werden. Durch Andrücken des Andrückelements gegen die Rohr-Außenmantelfläche des ARE-Vorformlings wird eine Kraft erzeugt, die eine Verschiebung des ARE-Vorformlings bewirken kann. Diese Vorgehensweise entspricht der oben erläuterten "Nachpositionierung" beziehungsweise "Feinjustierung". Das Andrückelement ist einstückig ausgeführt oder es besteht aus mehreren miteinander zusammenwirkenden Komponenten, wie beispielsweise einer Stellschraube, die auf einen in der Querbohrungen axial verschiebbaren Kolben einwirkt.

Bei einem verschachtelten ARE-Vorformling, der mehrere rohrförmige Ausgangskomponenten umfasst, wird vorzugsweise eine Positionierhilfe eingesetzt, welche Justagemittel für die Nachpositionierung aller rohrförmigen Ausgangskomponenten des ARE-Vorformlings aufweist. Insbesondere sind entsprechende Aufnahmen, Querbohrungen und Andrückelemente für alle rohrförmigen Ausgangskomponenten vorgesehen.

Vorzugsweise alle Querbohrungen verlaufen von einer Außenseite der Positionierhilfe bis zu der jeweiligen Aufnahme und - bezogen auf die Positionierhilfe-Längsachse - in radialer Richtung. Mindestens einige der Querbohrungen können dabei die Positionierhilfe-Längsachse schneiden. Dadurch hat die auf den jeweiligen ARE-Vorformling einwirkende Verschiebungs-Kraft eine Richtungs-Komponente, die vollständig oder mindestens teilweise in radialer Richtung wirkt und die den ARE-Vorformling - und gegebenenfalls eine Ausgangskomponente desselben - nach außen, in Richtung der Hüllrohr-Innenseite verschiebt. Dadurch können unzureichende Kontakte zwischen Hüllrohr und ARE-Vorformling beziehungsweise zwischen den Ausgangskomponenten desselben hergestellt oder verbessert werden.

Vorzugsweise sind die Aufnahmen leicht überdimensioniert, so dass ein gewisses mechanisches Spiel für die Feinjustierung der ARE-Vorformlinge verbleibt. Im Hinblick darauf haben die Aufnahmen vorteilhafterweise einen ovalen oder besonders bevorzugt einen Langloch-Querschnitt, mit einer langen Hauptachse und mit einer kurzen Hauptachse, wobei die lange Hauptachse radial zur Positionierhilfe-Längsachse verläuft.

Je größer das Längenverhältnis der langen und der kurzen Hauptachse ist, umso größer ist im Allgemeinen die maximal zur Verfügung stehende Verschiebungsstrecke. Dieses Längenverhältnis liegt bevorzugt im Bereich von 1,01 bis 1,3.

Bei einer vorteilhaften Verfahrensweise wird eine Positionierhilfe eingesetzt, die zur Positionierung einer Anzahl "n" von ARE-Vorformlingen ausgelegt ist, und die im Querschnitt mindestens eine Flachseite hat, und die vorzugsweise eine im Querschnitt polygonale Außenkontur mit einer Anzahl "N" von Flachseiten aufweist, wobei gilt: N=n oder N=2n, wenn "n" eine gerade Zahl ist, und wobei gilt: N=2n, wenn "n" eine ungerade Zahl größer 1 ist.

Die Außenkontur kann sich teilweise oder vollständig aus Flachseiten zusammensetzen. Die mindestens eine Flachseite verläuft parallel zu der Längsachse der Positionierhilfe und bildet mindestens einen Teil von deren Außenseite. Eine einzige Flachseite genügt, um das gegenseitige Ausrichten von Positionierungsschablonen zu erleichtern, die beiderseits des Hüllrohres verwendet werden. Die mindestens eine Flachseite vereinfacht außerdem die Erzeugung von Querbohrungen, die an der Flachseite beginnen, und die sich jeweils zu einer der Aufnahmen für einen ARE-Vorformling oder eine Ausgangskomponente desselben erstrecken. Die Flächennormale der jeweiligen Flachseite verläuft dabei parallel zu Richtung der Querbohrung, was deren Erzeugung vereinfacht.

Es hat sich als vorteilhaft erwiesen, wenn die Positionierhilfe und das Hüllrohr axial voneinander beabstandet sind.

Kontakt oder Fixierung können eine gegenseitige Verkippung der Längsachsen von Positionierhilfe und Hüllrohr bewirken, was durch den Abstand vermieden wird. Dafür genügt ein sehr geringer axialer Abstand von beispielsweise 0,1mm. Bei sehr großen Abständen von beispielsweise mehr als 500mm überwiegen andere Handhabungs-Nachteile.

Nachdem die ARE-Vorformlinge mittels der Positionierhilfe positioniert worden sind, werden sie vorteilhafterweise zusätzlich in dieser Position fixiert, vorzugsweise durch Erzeugen einer stoffschlüssigen Fügeverbindung. Eine stoffschlüssige Fügeverbindung kann beispielsweise durch lokales Verschweißen des Primärrohres mit der Hüllrohr-Innenseite erfolgen, beziehungsweise bei verschachtelten ARE-Vorformlingen durch lokales Verschweißen des Sekundärrohres mit der Primärrohr-Innenseite oder dem Tertiärrohr mit der Sekundärrohr-Innenseite. Die Fixierung der Position erfolgt vorteilhafterweise an beiden Enden des ARE-Vorformlings.

Hinsichtlich des Verfahrens zur Herstellung einer Vorform für eine antiresonante Hohlkernfaser wird die oben angegebene Aufgabe durch ein Verfahren gemäß Anspruch 10 gelöst.

Ausgehend von einem Verfahren zur Herstellung der Hohlkernfaser gemäß der eingangs genannten Gattung wird die Maßnahme zur Erstpositionierung der ARE-Vorformlinge an peripheren Soll-Positionen der Hüllrohr-Innenseite ergänzt, indem eine Positionierhilfe eingesetzt wird, die mit Justagemitteln ausgestattet ist, die eine gegenüber der Erstpositionierung geänderte Nachpositionierung von mindestens einem Teil der ARE-Vorformlinge ermöglichen.

Bei der Herstellung der Vorform für eine antiresonante Hohlkernfaser wird zunächst eine "primäre Vorform" erzeugt. Die Herstellung der primären Vorform umfasst üblicherweise den Einbau von ARE-Vorformlingen und deren Anordnung - und optional eine lokale Verbindung - mit der Innenseite des Hüllrohres.

Die Positionierhilfe der Erfindung ist mit "einstellbaren Justagemitteln" ausgestattet, die ausgehend von der Erstpositionierung des ARE-Vorformlings eine weitere Veränderung von dessen räumlicher Lage erlauben. Das einstellbare Justagemittel ermöglicht es, nach der Erstpositionierung des ARE-Vorformlings, eine weitere Veränderung von dessen räumlicher Lage zu erreichen. Die Veränderung der räumlichen Lage erfolgt beispielsweise durch Verschieben des ARE-Vorformlings. Das räumliche "Verschieben" individueller ARE-Vorformlinge - insbesondere quer zur jeweiligen Rohr-Längsachse ("Feinjustierung").

Mittels Feinjustierung können der ARE-Vorformling, und vorzugsweise alle ARE-Vorformlinge der primären Vorform, möglichst genau an ihre Soll-Positionen innerhalb der Hüllrohr-Innenbohrung verbracht werden, und zwar dann, wenn dies bei der Erstpositionierung nicht exakt gelungen ist.

Bei ARE-Vorformlingen mit ineinander verschachtelten Ausgangskomponenten aus Primärrohr und mindestens einem Sekundärrohr umfasst die Feinjustierung die Verschiebung der räumlichen Lage mindestens des Primärrohres und vorzugsweise auch die Verschiebung von mindestens einem der Sekundärrohre innerhalb der Primärrohr-Innenbohrung.

Bei ARE-Vorformlingen mit ineinander verschachtelten Ausgangskomponenten aus Primärrohr, mindestens einem Sekundärrohr und mindestens einem Tertiärrohr umfasst die Feinjustierung vorzugsweise außerdem die Verschiebung der räumlichen Lage von mindestens einem der Tertiärrohre innerhalb der Sekundärrohr-Innenbohrung.

Infolge der Möglichkeit der Feinjustierung ist die Positionierhilfe nicht starr wie im Stand der Technik, sondern sie ist an die räumlichen Gegebenheiten flexibel oder variabel anpassbar. Dadurch können Maßabweichungen der Positionierhilfe, des Hüllrohres, der ARE-Vorformlinge und gegebenenfalls deren Ausgangskomponenten kompensiert werden. Insbesondere können durch die Feinjustierung ungewollte Spielräume und Spalten zwischen Hüllrohr und ARE-Vorformlingen sowie gegebenenfalls zwischen deren Ausgangskomponenten geschlossen werden. Durch Herbeiführung eines an und für sich gewünschten aber nicht vorhandenen Kontakts zwischen dem Hüllrohr und den ARE-Vorformlingen werden bei einem nachfolgenden thermischen Strecken der primären Vorform möglichst definierte, symmetrische räumliche Verteilungen der Richtung der Wirkung der Oberflächenspannung erreicht und so unbeabsichtigte Verformungen vermieden. Dies gilt bei verschachtelten ARE-Vorformlingen gleichermaßen für den Kontakt zwischen der Innenseite des Primärrohres mit mindestens einem Sekundärrohr, und gegebenenfalls für den Kontakt zwischen der Innenseite eines Sekundärrohres mit mindestens einem Tertiärrohr.

Die Positionierhilfe ist an einem stirnseitigen Ende des Hüllrohres angeordnet, vorteilhafterweise aber an beiden Stirnseiten.

Maßnahmen zur Herstellung der Vorform sind weiter oben im Zusammenhang der Herstellung der Hohlkernfaser erläutert und diese Erläuterungen werden hiermit einbezogen.

Hinsichtlich der Positionierhilfe wird die oben angegebene Aufgabe durch eine Positionierhilfe mit den Merkmalen von Anspruch 11 gelöst.

Insbesondere ist die Positionierhilfe dadurch gekennzeichnet, dass sie mit mindestens einem zweiten Justagemittel ausgestattet ist, das eine gegenüber der Erstpositionierung geänderte Nachpositionierung des mindestens einen Innenrohres ermöglicht.

Im Stand der Technik wird für die Erstpositionierung von Innenrohren an peripheren Soll-Positionen eines Außenrohres eine starre Schablone eingesetzt. Aufgrund von Maßtoleranzen sowohl bei der Schablone als auch beim Innenrohr und beim Außenrohr ergeben sich aufgrund dieser Erstpositionierung häufig ungewollte Spielräume und Spalten. Ein Spalt zwischen der Außenrohr-Innenseite und dem Innenrohr vermindert oder verhindert beispielsweise den Kontakt zwischen diesen Bauteilen. Dadurch entsteht beim anschließenden thermischen Strecken des Ensembles aus Außenrohr und Innenrohr eine lokal undefinierte Richtung der Wirkung der Oberflächenspannung und damit einhergehende ungewollte, unsymmetrische Verformungen, die zum teilweisen oder vollständigen Verlust des elongierten Bauteils führen können. Dies gilt beispielsweise für Ausgangskomponenten von verschachtelten ARE-Vorformlingen, wie beispielsweise für einen fehlenden Kontakt zwischen der Primärrohre-Innenseite und einem dort angeordneten Sekundärrohr, beziehungsweise für einen fehlenden Kontakt zwischen der Sekundärrohr-Innenseite und einem dort angeordneten Tertiärrohr. So resultiert im Fall, dass ein ARE-Außenrohr von Anfang an am Hüllrohr anliegt eine andere Verformung als im Fall, bei dem ein ARE-Außenrohr erst später im Verlauf des thermischen Streckens am Hüllrohr angeschmolzen wird.

Um diesen Nachteil möglichst zu vermeiden, erlaubt die Positionierhilfe der Erfindung eine Nachpositionierung, mittels der ausgehend von der Erstpositionierung des mindestens einen Innenrohres eine weitere Veränderung von dessen räumlicher Lage ermöglicht wird. Die Positionierhilfe der Erfindung ist insoweit mit mindestens einem "einstellbaren Justagemittel" ausgestattet. Das einstellbare Justagemittel ermöglicht es, nach der Erstpositionierung des Innenrohres, eine weitere Veränderung von dessen räumlicher Lage zu erreichen. Die Veränderung der räumlichen Lage erfolgt beispielsweise durch Verschieben des Innenrohres, was hier auch als "Feinjustierung" des Innenrohres bezeichnet wird.

Mittels dieser Feinjustierung können das mindestens eine Innenrohr, und vorzugsweise alle Innenrohre eines Bauteil-Ensembles, möglichst genau an ihre Soll-Positionen innerhalb der Außenrohr-Innenbohrung verbracht werden, und zwar dann, wenn dies bei der Erstpositionierung nicht exakt gelungen ist.

Infolge der Möglichkeit der Feinjustierung ist die Positionierhilfe nicht starr wie im Stand der Technik, sondern sie ist an die räumlichen Gegebenheiten flexibel oder variabel anpassbar. Dadurch können Maßabweichungen der Positionierhilfe, des Außenrohres, des mindestens einen Innenrohres und gegebenenfalls weiterer Ausgangskomponenten kompensiert werden. Insbesondere können durch die Feinjustierung ungewollte Spielräume und Spalten zwischen Außenrohr und Innenrohr sowie gegebenenfalls zwischen weiteren Ausgangskomponenten geschlossen werden. Durch Herbeiführung eines an und für sich gewünschten aber nicht vorhandenen Kontakts zwischen dem Außenrohr und dem mindestens einen Innenrohr werden bei einem nachfolgenden thermischen Strecken eine zeitlich und räumlich möglichst definierte Richtung der Wirkung der Oberflächenspannung erreicht und so unbeabsichtigte Verformungen vermieden.

Die Positionierhilfe besteht beispielsweise aus Metall, Keramik, Glas oder aus Grafit. Sie ist für die Anordnung an einem der stirnseitigen Enden des Außenrohres, vorteilhafterweise aber an beiden Stirnseiten des Außenrohres, ausgelegt. Sie kann aus einem Teil gefertigt sein oder sie kann aus mehreren Teilstücken zusammengefügt sein.

Die Positionierhilfe ist beispielsweise einsetzbar für die Positionierung und Feinjustierung von ARE-Vorformlingen an der Innenseite eines Hüllrohres, wobei in dem Fall die ARE-Vorformlinge "Innenrohre" darstellen und das Hüllrohr ein "Außenrohr".

Die Positionierhilfe ist auch einsetzbar für die Positionierung und Feinjustierung bei ARE-Vorformlingen, mit ineinander verschachtelten Ausgangskomponenten aus Primärrohr und mindestens einem Sekundärrohr, wobei die Feinjustierung die Verschiebung der räumlichen Lage von mindestens einem der Sekundärrohre innerhalb der Primärrohr-Innenbohrung betrifft. In dem Fall stellt das Primärrohr ein "Außenrohr" dar und das mindestens eine Sekundärrohr stellt ein "Innenrohr" dar.

Die Positionierhilfe ist außerdem einsetzbar für die Positionierung und Feinjustierung bei ARE-Vorformlingen, mit ineinander verschachtelten Ausgangskomponenten aus Primärrohr, mindestens einem Sekundärrohr und mindestens einem Tertiärrohr, wobei die Feinjustierung vorzugsweise außerdem die Verschiebung der räumlichen Lage von mindestens einem der Tertiärrohre innerhalb der Sekundärrohr-Innenbohrung umfasst. In dem Fall stellt das Primärrohr ein "Außenrohr" und das Tertiärrohr ein "Innenrohr" dar, und das mindestens eine Sekundärrohr ist ein "Innenrohr" in Bezug auf das Primärrohr und es ist ein "Außenrohr" in Bezug das Tertiärrohr.

Die Veränderung der räumlichen Lage des Innenrohres geschieht vorteilhafterweise durch ein Verschieben quer zur Rohr-Längsachse des Innenrohres. "Quer" bedeutet beispielsweise eine Verschiebung durch Einwirkung einer Kraft, die eine Richtungskomponente aufweist, die mit der Rohr-Längsachse einen Winkel von 45 bis 135 Grad einschließt. Ganz besonders effektiv ist ein Einschließungswinkel um 90 Grad, wobei die Verschiebungs-Kraft in einer Richtung senkrecht zur Rohr-Längsachse wirkt.

Bei einer vorteilhaften Ausführungsform weist die Positionierhilfe eine Längsachse und eine Außenseite auf, wobei das mindestens eine erste Justagemittel eine Aufnahme für das Innenrohr umfasst, und wobei das mindestens eine zweite Justagemittel eine Querbohrung aufweist, die von der Außenseite der Positionierhilfe bis zu der Aufnahme verläuft und durch die hindurch sich ein Andrückelement erstreckt.

Die mindestens eine Aufnahme hat beispielsweise eine zylinderförmige Innenkontur, die an die Außenkontur des Innenrohres angepasst ist. In die Aufnahme ragt ein Ende des Innenrohres hinein oder das Innenrohr erstreckt sich durch die Aufnahme hindurch. Dies entspricht im Wesentlichen dem aus dem Stand der Technik bekannten Positionierhilfen für die Erstpositionierung. Im Unterschied dazu umfasst die Positionierhilfe der Erfindung vorzugsweise außerdem Querbohrungen, die von der Außenseite der Positionierhilfe bis zur jeweiligen Aufnahme verlaufen. Die Querbohrungen haben einen einheitlichen Querschnitt oder sie haben einen Querschnitt, der sich von außen nach innen verjüngt. Die Verjüngung kann als stufenweise Querschnittsverengung ausgeführt sein.

Durch die Querbohrung hindurch erstreckt sich ein Andrückelement, wie zum Beispiel eine Schraube, wobei die Querbohrung gegebenenfalls mindestens teilweise als Gewindebohrung ausgebildet ist. Das Andrückelement kann an der Rohr-Außenmantelfläche des ARE-Vorformlings anliegen oder es kann gegen die Rohr-Außenmantelfläche des ARE-Vorformlings gedrückt werden.. Durch Andrücken des Andrückelements gegen die Rohr-Außenmantelfläche des ARE-Vorformlings wird eine Kraft erzeugt, die eine Verschiebung des ARE-Vorformlings bewirken kann. Diese Vorgehensweise entspricht der oben erläuterten "Nachpositionierung" beziehungsweise "Feinjustierung". Das Andrückelement ist einstückig ausgeführt oder es besteht aus mehreren miteinander zusammenwirkenden Komponenten, wie beispielsweise einer Stellschraube, die auf einen in der Querbohrungen axial verschiebbaren Kolben einwirkt.

Wie oben bereits ausgeführt, ist die Positionierhilfe zur Positionierung und Feinjustierung der rohrförmigen Ausgangskomponenten eines verschachtelten ARE-Vorformlings einsetzbar, also dem Primärrohr, mindestens einem Sekundärrohr und gegebenenfalls mindestens einem Tertiärrohr. Dabei weist die Positionierhilfe Justagemittel für die Nachpositionierung aller rohrförmigen Ausgangskomponenten des ARE-Vorformlings auf. Insbesondere sind entsprechende Aufnahmen, Querbohrungen und Andrückelemente für alle rohrförmigen Ausgangskomponenten vorgesehen. Die Querbohrungen verlaufen von einer Außenseite der Positionierhilfe bis zu der jeweiligen Aufnahme. Sie schneiden dabei vorzugsweise die Positionierhilfe-Längsachse. Dadurch hat die auf das jeweilige Innenrohr (Sekundärrohr beziehungsweise Tertiärrohr) einwirkende Verschiebungs-Kraft eine Richtungs-Komponente, die vollständig oder mindestens teilweise in einer radialen Richtung wirkt, die das Innenrohr in Richtung der Außenrohr-Innenseite (Primärrohre beziehungsweise Sekundärrohr) verschiebt. Dadurch können unzureichende Kontakte zwischen dem Außenrohr und Innenrohr hergestellt oder verbessert werden.

Vorzugsweise sind die Aufnahmen leicht überdimensioniert, so dass ein gewisses mechanisches Spiel für die Feinjustierung des mindestens einen Innenrohres verbleibt. Im Hinblick darauf haben die Aufnahmen vorteilhafterweise einen ovalen Querschnitt, und besonders bevorzugt einen Langloch-Querschnitt, mit einer langen Hauptachse und mit einer kurzen Hauptachse, wobei die lange Hauptachse radial zur Positionierhilfe-Längsachse verläuft.

Je größer das Längenverhältnis der langen und der kurzen Hauptachse, ist, umso größer ist im Allgemeinen die maximal zur Verfügung stehende Verschiebungsstrecke. Dieses Längenverhältnis liegt bevorzugt im Bereich von 1,01 bis 1,3.

Bei einer vorteilhaften Ausführungsform ist die Positionierhilfe zur Positionierung einer Anzahl "n" von ARE-Vorformlingen an der Innenseite eines Hüllrohres ausgelegt, und sie hat im Querschnitt mindestens eine Flachseite, wobei sie vorzugsweise eine im Querschnitt polygonale Außenkontur mit einer Anzahl "N" von Flachseiten aufweist, wobei gilt: N=n oder N=2n, wenn "n" eine gerade Zahl ist, und wobei gilt: N=2n, wenn "n" eine ungerade Zahl größer 1 ist.

Die Außenkontur kann sich teilweise oder vollständig aus Flachseiten zusammensetzen. Die mindestens eine Flachseite verläuft parallel zu der Längsachse der Positionierhilfe und bildet mindestens einen Teil von deren Außenseite. Eine einzige Flachseite genügt, um das gegenseitige Ausrichten von Positionierungsschablonen zu erleichtern, die beiderseits des Hüllrohres verwendet werden. Die mindestens eine Flachseite vereinfacht außerdem die Erzeugung von Querbohrungen, die an der Flachseite beginnen, und die sich jeweils zu einer der Aufnahmen für einen ARE-Vorformling oder eine Ausgangskomponente desselben erstrecken. Die Flächennormale der jeweiligen Flachseite verläuft dabei parallel zu Richtung der Querbohrung, was deren Erzeugung vereinfacht.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der übrigen Beschreibung Gesagte maßgeblich.

Für Begriffe und Messverfahren, die in der Beschreibung nicht speziell definiert sind, ist die Auslegung gemäß der Internationalen Fernmeldeunion (ITU; International Telecommunication Union) maßgeblich. Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum am nächsten vor dem der vorliegenden Anmeldung liegt. Sollten Messbedingungen nicht angegeben sein, so gelten als Standard-Bedingungen (SATP-Bedingungen) für die Temperatur 298,15 K (25°C, 77°F) und für den absoluten Druck 100 kPa (14,504 psi, 0.986 atm).

### Antiresonanzelemente

Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### ARE- Vorformling

Als ARE-Vorformlinge werden die Komponenten der Vorform bezeichnet, die in die Hüllrohr-Innenbohrung eingesetzt und an der Innenseite des Hüllrohres angeordnet werden. Sie werden im Wesentlichen durch thermisches Strecken beim Faserziehprozess zu Antiresonanzelementen in der Hohlkernfaser umgeformt und bilden den inneren Mantelbereich der Hohlkernfaser. Verschachtelte ARE-Vorformlinge bilden in der Hohlkernfaser verschachtelte Antiresonanzelemente. Sie setzen sich aus mehreren Ausgangskomponenten zusammen, nämlich einem Primärrohr und mindestens einer weiteren zylinderförmigen Ausgangskomponente, die in der Innenbohrung des Primärrohres angeordnet ist. Bei der mindestens einen weiteren Ausgangskomponente kann es sich um mindestens ein weiteres Rohr handeln, das an der Innenmantelfläche des Primärrohres anliegt. Das weitere Rohr wird als "Nested Element" oder als "Sekundärrohr" bezeichnet. In der Innenbohrung des Sekundärrohres kann bei mehrfach verschachtelten ARE-Vorformlingen mindestens eine weitere Ausgangskomponente angeordnet sein, beispielsweise ein an der Innenmantelfläche des verschachtelten Sekundärrohres anliegendes, drittes Rohr, das hier als "Tertiärrohr" bezeichnet wird. Auch verschachtelte ARE-Vorformlinge werden hier kurz als "ARE-Vorformling" bezeichnet.

Bei verschachtelten ARE-Vorformlingen bilden die Ausgangskomponenten - also das Primärrohr, mindestens ein Sekundärrohr und gegebenenfalls mindestens ein Tertiärrohr - ein loses Ensemble. Oder sie liegen als vorkonfektionierter ARE-Vorformling vor, also einem selbsttragenden Gebilde, bei dem das mindestens eine Sekundärrohr an der Primärrohr-Innenseite verschweißt ist, und gegebenenfalls das mindestens eine Tertiärrohr an der Sekundärrohr-Innenseite, so dass diese Ausgangskomponenten zusammen handhabbar sind.

### Vorform / primäre Vorform / sekundäre Vorform / Kernvorform (Cane)

Die Vorform ist dasjenige Bauteil, aus dem die antiresonante Hohlkernfaser gezogen wird. Es ist eine primäre Vorform oder eine durch Weiterverarbeitung der primären Vorform erzeugte sekundäre Vorform. Die primäre Vorform kann als Baugruppe aus mindestens einem Hüllrohr und darin lose aufgenommenen ARE-Vorformlingen oder fest darin fixierten ARE-Vorformlingen vorliegen. Die ARE-Vorformling können vorkonfektioniert sein.

Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Thermisches Strecken,
(ii) Kollabieren,
(iii) Kollabieren und gleichzeitiges Thermisches Strecken,
(iv) Aufkollabieren von zusätzlichem Mantelmaterial,
(v) Aufkollabieren von zusätzlichem Mantelmaterial und anschließendes Thermisches Strecken,
(vi) Aufkollabieren von zusätzlichem Mantelmaterial und gleichzeitiges Thermisches Strecken.

Als Kernvorform (engl. Cane) wird in der Literatur eine Vorform bezeichnet, die durch Kollabieren und/oder thermisches Strecken einer primären Vorform erhalten wird und die damit unter die Definition der sekundären Vorform fällt. Typischerweise wird sie vor oder beim Ziehen der Hohlkernfaser mit zusätzlichem Mantelmaterial überfangen.

### Vorkonfektionierter ARE-Vorformling

Es ist ein selbsttragendes, handhabbares Gebilde, das ein Primärrohr und mindestens ein Sekundärrohr enthält, das mit der Primärrohr-Innenseite fest verbunden ist. An der Innenseite des Sekundärrohres kann mindestens ein weiteres Innenrohr - ein Tertiärrohr - fixiert sein.

### Lange Hauptachse / kurze Hauptachse

Als "lange Hauptachse" wird hier die längste Querschnittsachse und als "kurze Hauptachse" die kürzeste Querschnittsachse eines ovalen Querschnitts oder eines Langloch-Querschnitts bezeichnet. Im Fall eines elliptischen Querschnitts entspricht die lange Hauptachse der großen Halbachse und die kurze Hauptachse entspricht der kleinen Halbachse. Bei einem Langloch entspricht die lange Hauptachse der Langlochstrecke (der Länge des Langlochs), und die kurze Hauptachse entspricht der Breite des Langlochs..

### Thermisches Strecken / Kollabieren / Elongierverhältnis

Die Anordnung von Primärrohr, einem Sekundärrohre oder mehreren Sekundärrohren, einem Tertiärrohr oder mehreren Tertiärrohren, oder die primäre Vorform werden thermisch gestreckt (elongiert). Die Streckung kann ohne gleichzeitiges Kollabieren erfolgen. Das thermische Strecken kann maßstäblich erfolgen, so dass sich beispielsweise die Form und Anordnung von Bauteilen oder Bestandteilen der primären Vorform im gestreckten, elongierten Endprodukt widerspiegeln. Beim thermischen Strecken kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem thermischen Strecken einher.

Das Elongierverhältnis berechnet sich hierbei als Verhältnis der Bauteil-Längen nach und vor dem thermischen Strecken.

### Hohlkern / Innerer Mantelbereich / Äußerer Mantelbereich

Die Baugruppe aus Hüllrohr und darin lose aufgenommenen oder fest fixiertem gefügten Ensemble wird hier auch als "primäre Vorform" bezeichnet. Die primäre Vorform umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf die primäre Vorform erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

### Querschnitt / Innenbohrung

Der Begriff "Querschnitt" in Verbindung mit langestreckten ARE-Vorformlingen und deren zylinderförmigen Ausgangskomponenten bezeichnet stets den Querschnitt senkrecht zur jeweiligen Längsachse, und zwar - sofern nichts anderes angegeben - bei rohrförmigen Bauteilen den Querschnitt der Außenkontur (nicht: den Querschnitt der Innenkontur).

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur** 1: Positionierhilfen, Hüllrohr und Ausgangskomponenten verschachtelter ARE-Vorformlingen zwecks Herstellung einer primären Vorform als Explosionsdarstellung und als Zusammenbauzeichnung in einer Seitenansicht,
- **Figur 2**: einen Querschnitt einer sekundären Vorform für eine Hohlkernfaser mit einem NANF-Design, mit einem Hüllrohr und verschachtelten ARE-Vorformlingen,
- **Figur 3**: einen Längsschnitt einer Positionierhilfe zum Einsatz bei der Herstellung der Vorform von Figur 2,
- **Figur 4**: eine räumliche Darstellung der Positionierhilfe von Figur 3 in einer Ansicht auf die vordere Stirnseite,
- **Figur 5**: einen Querschnitt einer sekundären Vorform für eine Hohlkernfaser mit einem DNANF-Design, mit einem Hüllrohr und verschachtelten ARE-Vorformlingen,
- **Figur 6**: einen Längsschnitt einer ersten Ausführungsform einer Positionierhilfe zum Einsatz bei der Herstellung der Vorform von Figur 5,
- **Figur 7**: eine räumliche Darstellung der Positionierhilfe von Figur 6 in einer Ansicht auf die vordere Stirnseite,
- **Figur 8**: einen Querschnitt einer sekundären Vorform für eine Hohlkernfaser mit einem ALIF-Design mit einem Hüllrohr und verschachtelten ARE-Vorformlingen in einer Ansicht auf die Vorform-Stirnseite,
- **Figur 9**: einen Längsschnitt einer Positionierhilfe zum Einsatz bei der Herstellung der Vorform von Figur 8,
- **Figur 10**: eine räumliche Darstellung der Positionierhilfe von Figur 9 in einer Ansicht auf die vordere Stirnseite,
- **Figur 11**: einen vorderen Teil einer zweiten, mehrteiligen Ausführungsform einer Positionierhilfe zum Einsatz bei der Herstellung der Vorform von Figur 5, anhand eines Querschnitts des vorderen Teils zur Aufnahme und Positionierung der Primärrohre, und
- **Figur 12**: eine räumliche Darstellung des vorderen Teils der Positionierhilfe von Figur 11 in einer Ansicht auf die vordere Stirnseite.

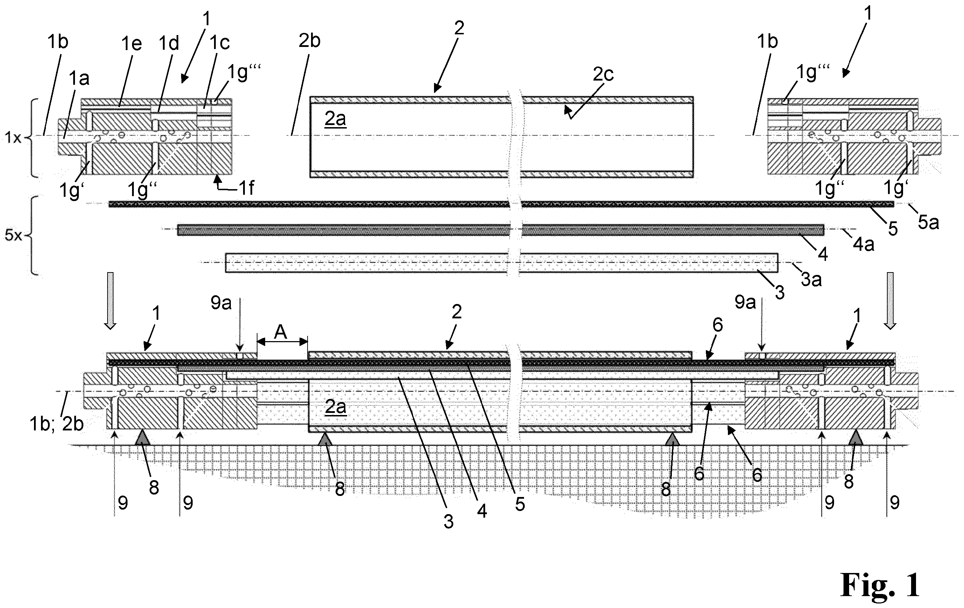

Die Explosionsdarstellung der **Figur 1** zeigt im oberen Bereich von links nach rechts und von oben nach unten: eine linke Positionierhilfe 1, ein Hüllrohr 2, eine rechte Positionierhilfe 1, fünf Tertiärrohre 5 mit den Rohr-Längsachsen 5a, fünf Sekundärrohre 4 mit den Rohr-Längsachsen 4a und fünf Primärrohre 3 mit den Rohr-Längsachsen 3a. Die Sekundärrohre 4 sind 40mm länger als die Primärrohre 3 und die Tertiärrohre sind 60mm länger als die Sekundärrohre 4.

Das Hüllrohr 2 besteht aus Quarzglas. Entlang seiner Innenbohrung 2a erstreckt sich die Hüllrohr-Längsachse 2b. Die Hüllrohr-Innenseite ist mit 2c bezeichnet.

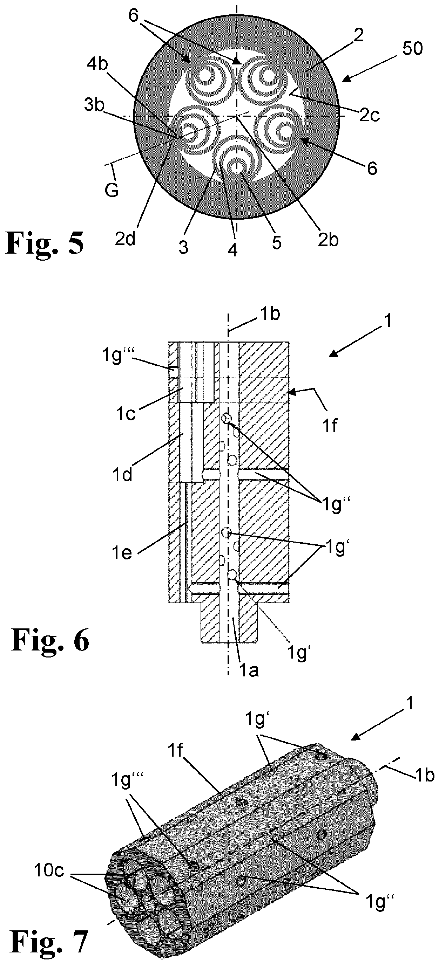

Die beiden Positionierhilfen 1 sind aus einem Stück gefertigt und bestehen aus Grafit. Sie haben eine durchgängige Mittenbohrung 1a mit einer Längsachse 1b, eine Außenseite 1f, mehrere im Seitenbereich eingebrachte und in axialer Richtung ineinander übergehende, zylinderförmige Aufnahmen 1c, 1d, 1e mit unterschiedlichen Öffnungsweiten sowie mehrere Querbohrungen 1g', 1g", 1g‴, die jeweils von der Positionierhilfe-Außenseite 1f ausgehen und in einer der zylinderförmigen Aufnahmen 1c, 1d, 1e münden. Die Querbohrungen 1g', 1g", 1g‴ sind jeweils mindestens über einen Teil ihrer Länge mit einem Schraubgewinde ausgeführt. Die Positionierhilfe 1 wird weiter unten anhand der Figuren 6 und 7 noch näher erläutert.

Je ein Tertiärrohr 5, Sekundärrohr 4 und Primärrohr 3 werden zu einem ARE-Vorformling 6 zusammengefasst, der zur Herstellung einer Hohlkernfaser mit dem DNANF-Design ausgelegt ist. Dabei ist an der Innenseite des Primärrohres 3 das Sekundärrohr 4, und an der Innenseite des Sekundärrohres 4 ist das Tertiärrohr 5 angeordnet. Fünf dieser ARE-Vorformlinge 6 werden für die Fertigung einer Vorform mit dem DNANF-Design eingesetzt, wie sie Figur 5 zeigt.

Bei der im unteren Bereich der Figur 1 gezeigten Einbausituation sind die fünf ARE-Vorformlinge 6 an der Innenseite 2c des Hüllrohres 2 angeordnet. Die Längsachsen 1b der Positionierhilfen 1 und die Hüllrohr-Längsachse 2b verlaufen dabei koaxial. Das Hüllrohr 2 und die Positionierhilfen 1 sind mit horizontal orientierten Längsachsen 1b, 2b auf höhenkalibrierten Kanten 8 gelagert. Die ARE-Vorformlinge 6 erstrecken sich durch die Innenbohrung 2a des Hüllrohres 2 hindurch, wobei die beiderseitigen Enden in jeweils eine der Positionierhilfen 1 hineinragen und darin gelagert sind. Nur drei der fünf ARE-Vorformling 6 sind zu erkennen, und aus Gründen der besseren Erkennbarkeit sind nur bei einem davon detailliert das Primärrohr 3, das darin eingesetzte Sekundärrohr 4 und das darin eingesetzte Tertiärrohr 5 dargestellt.

Die beiderseitigen Enden der Primärrohre 3 erstrecken sich jeweils in die vordere Aufnahme 1c, die als Langloch ausgeführt ist, deren Innenmaß geringfügig größer ist als der Außendurchmesser des Primärrohres 3. Die beiderseitigen Enden der Sekundärrohre 4 erstrecken sich jeweils in die mittlere Aufnahme 1d, die ebenfalls als Langloch ausgeführt ist und deren Innenmaß geringfügig größer ist als der Außendurchmesser des Sekundärrohres 4. Die beiderseitigen Enden der Tertiärrohre 5 erstrecken sich jeweils in die hintere Aufnahme 1e, die ebenfalls als Langloch ausgeführt ist und deren Innenmaß geringfügig größer ist als der Außendurchmesser des Tertiärrohres 5. Die Ausgangskomponenten (Rohre 3, 4, 5) der ARE-Vorformlinge 6 werden in den Aufnahmen in lateraler, radialer Richtung geführt, was hier als Grob-Positionierung bezeichnet wird.

Die Längen der Primärrohre 3, Sekundärrohre 4 und Tertiärrohre 5 sind so abgestuft, dass die Primärrohre 3 in den beiderseitigen vorderen Aufnahmen 1c enden, die Sekundärrohre 4 in den beiderseitigen mittleren Aufnahmen 1d enden und aus den Primärrohren 3 jeweils ein Stück herausragen, und dass die Tertiärrohre 5 in den beiderseitigen hinteren Aufnahmen 1c enden und aus den Sekundärrohren 4 jeweils ein Stück herausragen.

Eine Feinjustierung jeder einzelnen Ausgangskomponente (3, 4, 5) der ARE-Vorformlinge 6 in lateraler, radialer Richtung wird durch Einstellschrauben (Madenschrauben) ermöglicht, die durch die Querbohrungen 1g', 1g", 1g‴ eingeschraubt werden und die dabei eine Kraft auf jedes Primärrohr 3, auf jedes Sekundärrohr 4 und auf jedes Tertiärrohr 5 ausüben können. Die Positionierhilfen 1 werden an beiden Enden der ARE-Vorformlinge 6 eingesetzt, genauer gesagt im Bereich beider Enden der jeweiligen Ausgangskomponenten (3; 4; 5). Die Einstellschrauben sind anhand der Richtungspfeile 9 und 9a angedeutet. Die Kraft kann eine Verschiebung der jeweiligen rohrförmigen Ausgangskomponente (3; 4; 5) in einer Richtung quer, insbesondere in einer Richtung senkrecht zur jeweiligen Rohr-Längsachse bewirken, sofern die betreffende Ausgangskomponente in dieser Richtung noch verschiebbar ist und zwecks Feinjustierung in dieser Richtung verschoben werden soll.

Die Positionierhilfen 1 und das Hüllrohr 2 sind nicht fest miteinander verbunden und haben einen freien Abstand "A" von 30mm zueinander.

Nachdem die ARE-Vorformlinge 6 mittels der beiderseitigen Positionierhilfen 1 positioniert worden sind, werden sie zusätzlich in dieser Position durch lokales Verschweißen fixiert.

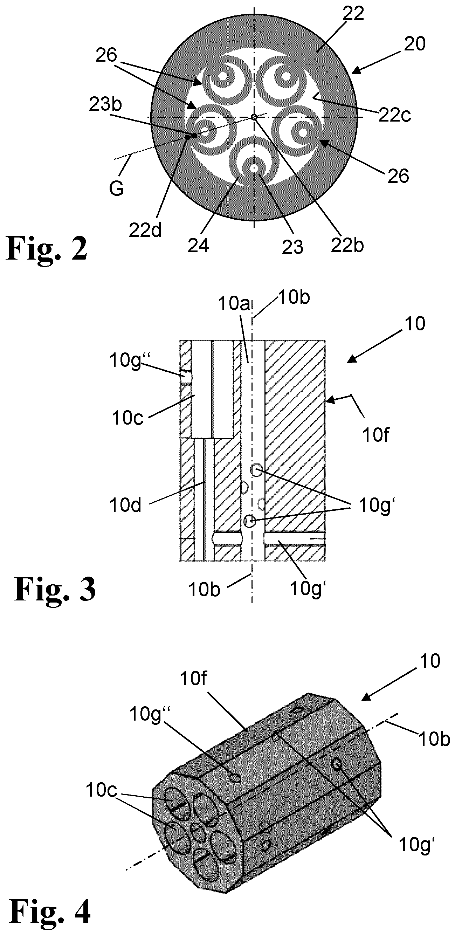

Die Skizze von **Figur 2** zeigt eine primäre Vorform 20 für eine Hohlkernfaser in einer Ansicht auf eine der Vorform-Stirnseiten Die Vorform 20 hat ein einfaches NANF-Design, so dass daraus eine Hohlkernfaser mit dem einfachen NANF-Design gezogen werden kann.

Die Vorform 20 umfasst ein Hüllrohr 22, in dessen Innenbohrung 22a fünf verschachtelte ARE-Vorformlinge 26 gleichmäßig verteilt und an peripheren Kontaktstellen 22d an der Hüllrohr-Innenseite 22canliegen. Die ARE-Vorformlinge 26 weisen jeweils ein Primärrohr 23 und ein Sekundärrohr 24 auf. Die Sekundärrohre 24 liegen an azimutalen Kontaktstellen 23b an der Primärrohr-Innenseite an. Das Hüllrohr 22 und die Rohre (23, 24) der ARE-Vorformlinge 26 bestehen aus undotiertem Quarzglas. Die Hüllrohr-Längsachse 22b und die Längsachsen von Primärrohren 23 und Sekundärrohren 24 verlaufen parallel zueinander.

Die azimutalen Kontaktstellen 23b an der Innenseite eines jeden der Primärrohre 23 und die peripheren Kontaktstellen 22d an der Innenseite des Hüllrohres 22 liegen auf jeweils auf einer Geraden G, die auch durch die Hüllrohr-Mittelachse 22b verläuft.

Die **Figuren 3 und 4** zeigen eine der beiden baugleichen Positionierhilfen 10, die bei der Herstellung der Vorform 20 in analoger Weise wie anhand Figur 1 erläutert, zur Lagerung des Hüllrohres 22 und zur Positionierung der fünf ARE-Vorformlinge 26 eingesetzt worden sind.

Die Positionierhilfe 10 ist aus einem Stück gefertigt und besteht aus Grafit. Sie hat eine durchgängige Mittenbohrung 10a mit einer Längsachse 10b, eine polygonale Außenseite 10f (Dekagon), mehrere im Seitenbereich eingebrachte und in axialer Richtung ineinander übergehende, zylinderförmige Aufnahmen 10c, 10d mit unterschiedlichen Öffnungsweiten sowie fünf Querbohrungen 10g' und fünf Querbohrungen 10g", die jeweils von der Positionierhilfe-Außenseite 10f ausgehen, die Innenbohrung 10a queren und in einer der zylinderförmigen Aufnahmen 10c, 10d münden. Die polygonale Außenseite 10f wird von zehn Flachseiten gebildet, deren Anzahl somit doppelt so groß ist wie die Anzahl der aufzunehmenden ARE-Vorformlinge 26.

Die fünf vorderen Aufnahmen 10c sind jeweils zur Aufnahme eines Primärrohres 3 (Figur 1) ausgelegt und die fünf hinteren Aufnahmen 10d zur Aufnahme eines Sekundärrohres 4 (Figur 1). Der Querschnitt der zylinderförmigen Aufnahmen 10c, 10d ist jeweils ein Langloch, wobei die lange Langloch-Hauptachse in radialer Richtung zur Längsachse 10b verläuft. Das Längenverhältnis von langer und Hauptachse beträgt 1,04.

Alle Querbohrungen 10g', 10g" sind jeweils mindestens über einen Teil ihrer Länge mit einem Schraubgewinde ausgeführt und mit Einstellschrauben 9 (Figur 1) bestückt. Die Querbohrungen 10g' verlaufen von einer Abflachung der Außenseite 10f durch die Innenbohrung 10a hindurch und schneiden die Längsachse 10b der Positionierhilfe 10. Daher sind diese Querbohrungen 10g' über die Länge der Positionierhilfe 10 im Bereich der hinteren Aufnahme 10d verteilt. Die durch diese Querbohrungen 10g' geführten Einstellschrauben 9 können jeweils auf die Außenmantelfläche eines Sekundärrohres 4 eine Kraft ausüben, die - bezogen auf die Längsachsen 1a und 2a - radial nach außen wirkt. Die durch die Querbohrungen 10g" geführten Einstellschrauben 9a können auf die Außenmantelfläche eines Primärrohres 3 eine Kraft ausüben, die - bezogen auf die Längsachse 10b - radial nach innen wirkt. Diese Einstellmöglichkeit ist nur ergänzend vorgesehen. Denn da jedes Sekundärrohr 4 unmittelbar an der Innenseite eines Primärrohres 3 anliegt, kann die auf das Sekundärrohr 4 mittels der Einstellschraube 9 ausgeübte Kraft auch mittelbar das Primärrohr 3 in radialer Richtung nach außen verschieben und damit eine Feinjustierung des Primärrohres 3 auch in diese Richtung bewirken.

Die Skizze von **Figur 5** zeigt eine primäre Vorform 50 für eine Hohlkernfaser in einer Ansicht auf eine der Vorform-Stirnseiten. Diese hat ein sogenanntes DNANF-Design, so dass daraus eine Hohlkernfaser mit DNANF-Design gezogen werden kann.

Die Vorform 50 umfasst ein Hüllrohr 2, in dessen Innenbohrung fünf verschachtelte ARE-Vorformlinge 6 gleichmäßig verteilt und an peripheren Kontaktstellen 2d mit der Hüllrohr-Innenseite verbunden sind. Die ARE-Vorformlinge 6 weisen jeweils ein Primärrohr 3, ein Sekundärrohr 4 und ein Tertiärrohr 5 auf. Die Sekundärrohre 4 liegen an azimutalen Kontaktstellen 3b an der Primärrohr-Innenseite an, und die Tertiärrohre 5 liegen an azimutalen Kontaktstellen 4b an der Sekundärrohr-Innenseite an. Das Hüllrohr 2 und die Rohre (3, 4, 5) der ARE-Vorformlinge 6 bestehen aus undotiertem Quarzglas. Die Rohr-Längsachsen verlaufen parallel zueinander.

Die azimutalen Kontaktstellen 3b und 4b an der Innenseite eines jeden der elongierten Primärrohre 3 beziehungsweise der elongierten Sekundärrohre 4 und die peripheren Kontaktstellen 2d an der Innenseite 2c des Hüllrohres 2 liegen auf jeweils auf einer Geraden G, die auch durch die Hüllrohr-Mittelachse 2bverläuft.

Die **Figuren 6 und 7** zeigen jeweils eine der beiden baugleichen Positionierhilfen 1, die bei der Herstellung der Vorform 50, wie anhand Figur 1 erläutert, zur Lagerung des Hüllrohres 2 und zur Positionierung der fünf ARE-Vorformlinge 6 eingesetzt worden sind.

Die Positionierhilfe 1 besteht aus Grafit. Sie hat eine durchgängige Mittenbohrung 1a mit einer Längsachse 1b, eine polygonale Außenseite 1f (Dekagon), mehrere im Seitenbereich eingebrachte und in axialer Richtung ineinander übergehende, zylinderförmige Aufnahmen 1c, 1d, 1e mit unterschiedlichen Öffnungsweiten sowie fünf Querbohrungen 1g', fünf Querbohrungen 1g" und fünf Querbohrungen 1g‴, die jeweils von der Positionierhilfe-Außenseite 1f ausgehend die Innenbohrung 1a queren und in einer der zylinderförmigen Aufnahmen 1c, 1d, 1e münden.

Die fünf vorderen Aufnahmen 1c sind jeweils zur Aufnahme eines Primärrohres 3 ausgelegt, die fünf mittleren Aufnahmen 1d jeweils zur Aufnahme eines Sekundärrohres 4, und die fünf hinteren Aufnahmen 1e zur Aufnahme eines Tertiärrohres 5. Die zylinderförmigen Aufnahmen 1c, 1d, 1e sind jeweils als Langloch ausgelegt, wobei die lange Achse des Langlochs (lange Hauptachse) im Querschnitt in radialer Richtung zur Längsachse 1b verläuft. Das Längenverhältnis von langer und Hauptachse beträgt 1,04.

Alle Querbohrungen 1g', 1g", 1g‴ sind jeweils über einen Teil ihrer Länge mit einem Schraubgewinde ausgeführt und mit Einstellschrauben (Figur 1) bestückt. Die durch die Querbohrungen 1g‴ geführten Einstellschrauben 9a können auf die Außenmantelfläche eines Primärrohres 3 eine Kraft ausüben, die - bezogen auf die Längsachse 1a - radial nach innen wirkt. Im Unterschied dazu verlaufen die Querbohrungen 1g', 1g"von einer Abflachung der Außenseite 1f durch die Innenbohrung 1b der Positionierhilfe 1 hindurch. Diese Querbohrungen 1g', 1g" sind daher über die Länge der Positionierhilfe 1 im Bereich der mittleren Aufnahme 1d beziehungsweise der hinteren Aufnahme 1e verteilt. Die durch die Querbohrungen 1g', 1g" geführten Einstellschrauben 9 können jeweils auf die Außenmantelfläche eines Sekundärrohres 4 beziehungsweise jeweils auf die Außenmantelfläche eines Tertiärrohres 5 eine Kraft ausüben, die - bezogen auf die Hüllrohr-Mittelachse 2a beziehungsweise auf die Positionierhilfe-Längsachse 1a - radial nach außen wirkt, also in Richtung der Hüllrohr-Innenseite 2c.

Da jedes Sekundärrohr 4 unmittelbar an der Innenseite eines Primärrohres 3 anliegt, kann die auf das Sekundärrohr 4 mittels der Einstellschraube 9 ausgeübte Kraft auch das Primärrohr 3 in radialer Richtung nach außen verschieben, und so eine Feinjustierung des Primärrohres 3 auch in dieser Richtung ermöglichen. Ebenso kann dadurch, dass jedes Tertiärrohr 5 an der Innenseite eines Sekundärrohre 4 anliegt die auf das Tertiärrohr 5 mittels der Einstellschraube 9 ausgeübte Kraft auch das Sekundärrohr 4 und damit mittelbar auch auf das Primärrohr 3 einwirken und eine Verschiebung in radialer Richtung nach außen bewirken, und so eine Feinjustierung des Sekundärrohres 4 und des Primärrohres 3 auch in dieser Richtung ermöglichen.

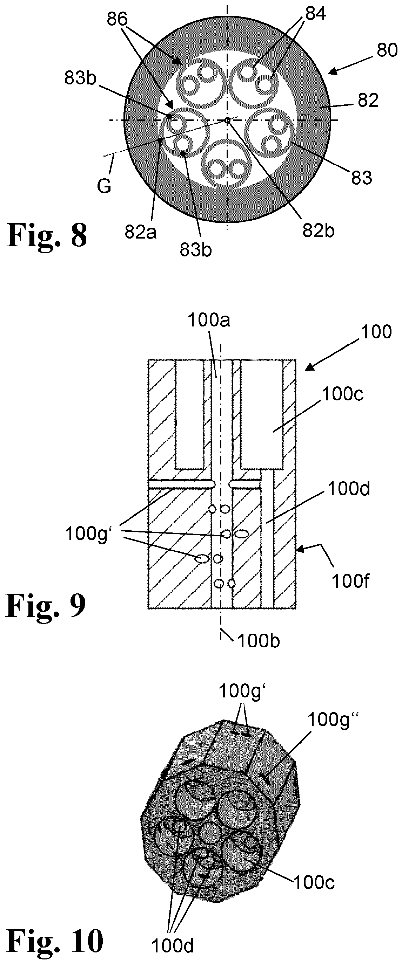

Die Skizze von **Figur 8** zeigt eine primäre Vorform 80mit einem ALIF-Design, so dass daraus eine Hohlkernfaser mit ALIF-Design gezogen werden kann.

Die Vorform 80 setzt sich zusammen aus einem Hüllrohr 82, an dessen Innenseite fünf ARE-Vorformlinge 86 gleichmäßig verteilt sind. Die ARE-Vorformlinge 86 weisen jeweils ein Primärrohr 83 und zwei in der Primärrohr-Innenbohrung angeordnete Sekundärrohre 84 auf. Das Hüllrohr 82 und die Rohre (83, 84) der ARE-Vorformlinge 86 bestehen aus undotiertem Quarzglas. Die Rohr-Längsachsen verlaufen parallel zueinander.

Die beiden azimutalen Kontaktstellen 83b an der Innenseite eines jeden der Primärrohre 83 befinden sich beidseitig und im gleichen Abstand zu einer Geraden G, die durch die Hüllrohr-Mittelachse 82b und durch die periphere Kontaktstelle 82a an der Innenseite des Hüllrohres 82 verläuft.

Die **Figuren 9 und 10** zeigen eine der beiden baugleichen Positionierhilfen 100, die bei der Herstellung der Vorform 80, wie anhand Figur 1 erläutert, zur Lagerung des Hüllrohres 82 und zur Positionierung der fünf ARE-Vorformlinge 86 eingesetzt worden sind.

Die Positionierhilfe 100 besteht aus Grafit. Sie hat eine durchgängige Mittenbohrung 100a mit einer Längsachse 100b, eine polygonale Außenseite 100f (Dekagon), mehrere im Seitenbereich eingebrachte und in axialer Richtung ineinander übergehende, zylinderförmige Aufnahmen 100c, 100d mit unterschiedlichen Öffnungsweiten.

Die fünf vorderen Aufnahmen 100c sind jeweils zur Aufnahme eines Primärrohres 83 ausgelegt, die zehn hinteren Aufnahmen 100d jeweils zur Aufnahme eines der Sekundärrohre 84. Der Querschnitt der zylinderförmigen Aufnahmen 100c, 100d ist jeweils als Langloch ausgeführt, wobei die lange Hauptachse des Langlochs in radialer Richtung zur Längsachse 100b verläuft. Das Längenverhältnis von langer und Hauptachse beträgt 1,04.

Zehn Querbohrungen 100g', die von der Außenseite 100f ausgehend die Innenbohrung 100a queren, münden in jeweils einer der zehn hinteren zylinderförmigen Aufnahmen 100d. Fünf weitere Querbohrungen 100g" (Figur 10), die ebenfalls von der Außenseite 100f ausgehen, münden in jeweils einer der fünf vorderen zylinderförmigen Aufnahmen 100c.

Alle Querbohrungen 100g', 100g" sind jeweils mindestens über einen Teil ihrer Länge mit einem Schraubgewinde ausgeführt und mit Einstellschrauben 9 (Figur 1) bestückt. Die Einstellschrauben 9 werden von der Außenseite 100f in die Querbohrungen 100g' beziehungsweise 100g" eingeführt.

Die durch die Querbohrungen 100g' geführten und die Innenbohrung 100a querenden Einstellschrauben 9 können jeweils auf die Außenmantelfläche eines Sekundärrohres 84 eine Kraft ausüben, die - bezogen auf die Hüllrohr-Mittelachse 82b beziehungsweise auf die Positionierhilfe-Längsachse 100b - radial nach au-βen wirkt, also in Richtung der Hüllrohr-Innenseite. Im Unterscheid dazu können die durch die Querbohrungen 200g" geführten und in den Aufnahmen 100d mündenden Einstellschrauben 9 auf die Außenmantelfläche der Primärrohre 83 eine Kraft ausüben, deren Richtung radial nach innen auf die Positionierhilfe-Längsachse 100b gerichtet ist. Diese Einstellmöglichkeit ist nur ergänzend vorgesehen. Denn da jedes Sekundärrohr 84 unmittelbar an der Innenseite eines Primärrohres 83 anliegt, wirkt die auf das Sekundärrohr 84 mittels der Einstellschraube 9 ausgeübte Kraft von der Primärrohr-Innenseite mittelbar auch auf das Primärrohr 83 ein und kann dieses in radialer Richtung nach außen verschieben und damit eine Feinjustierung der Position des Primärrohres 83 auch in dieser Richtung bewirken.

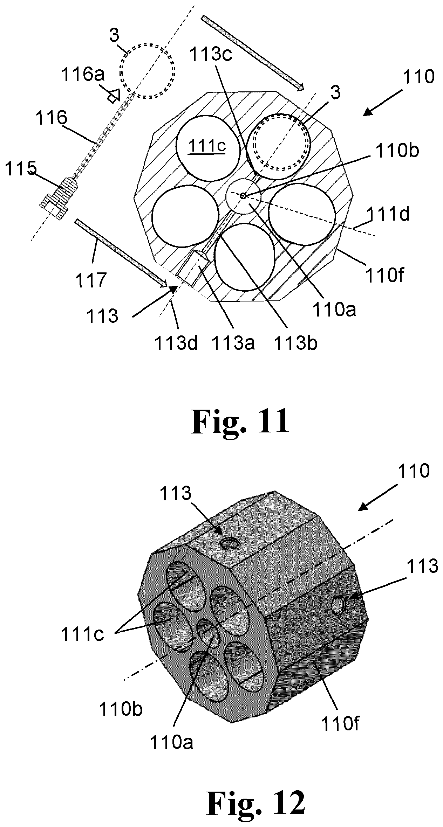

Die Positionierhilfen sind in den bisher erläuterten Ausführungsbeispielen einstückig ausgeführt. Alternativ können die Positionierhilfen auch aus mehreren Teilstücken zusammengesetzt sein. Dies wird am Beispiel einer zweiteiligen Positionierhilfe zur Herstellung einer Vorform 50 anhand der **Figuren 11 und 12** und in Verbindung mit den Figuren 1 und 5 erläutert.

Diese zeigen ein vorderes Teilstück 110 der zweiteiligen Positionierhilfe für eine primäre Vorform 50 (Figur 5) mit dem DNANF-Design. Im vorderen Teilstück 110 sind fünf vordere Aufnahmen 111c mit Langlochquerschnitt ausgebildet und um die Teilstück-Längsachse 110b (senkrecht zur Blattebene) und die Teilstück-Innenbohrung 110a gleichmäßig verteilt. Die lange Achse 111d des Langloch-Querschnitts erstreckt sich in radialer Richtung, bezogen auf die Längsachse 110b. Die vorderen Aufnahmen 111c dienen jeweils zur Aufnahme eines von fünf Primärrohren 3, wie in einem Fall schematisch anhand einer punktierten Kreislinie angedeutet.

Unter Einsatz allein des vorderen Teilstücks 110 der Positionierhilfe ist eine primäre Vorform für eine Hohlkernfaser mit einfachem Design herstellbar. Bei dieser primären Vorform sind lediglich fünf Primärrohre 3 um die Hüllrohr-Innenseite gleichmäßig verteilt. Komplexere Designs sind durch Verbindung des vorderen Teilstücks 110 mit einem hinteren Teilstück oder mit mehreren hintereinander angeordneten, hinteren Teilstücken herstellbar. In dem mindestens einen (nicht dar gestellten) hinteren Teilstück sind beispielsweise fünf Aufnahmen für die Sekundärrohre 4 sowie weitere fünf Aufnahmen für die Tertiärrohre 5 ausgebildet. Das hintere Teilstück kann mit dem vorderen Teilstück 110 stoßweise so verbunden sein, dass die Teilstück-Längsachsen (110b) koaxial verlaufen. Dies ist aber nicht unbedingt erforderlich, wenn der koaxiale Verlauf der Teilstück-Längsachsen (110b) auf andere Weise gewährleistet wird, beispielsweise dadurch, dass jedes der Teilstücke (110) unabhängig vom anderen positionierbar ist.

Das vordere Teilstück 110 hat eine dekagonale Außenkontur mit zehn Flachseiten. Ausgehend von der Außenseite 110f erstrecken sich fünf über die Teilstück-Länge verteilte Querbohrungen 113 zu jeder der Aufnahmen 111c. Eine davon ist im Querschnitt von Figur 11 gezeigt. Die Querbohrung 113 ist gekennzeichnet durch eine Querschnittsverminderung in Richtung einer Querbohrungs-Mittelachse 113d, entlang der sie einen vorderen Längenabschnitt 113a, einen mittleren Längenabschnitt 113b und einen hinteren Längenabschnitt 113c aufweist. Alle fünf Querbohrungen des vorderen Teilstücks 110 sind dementsprechend ausgeführt.

Der vordere Längenabschnitt 113a hat ein Innengewinde und ist zur Aufnahme einer Schraube 115 mit einem Außendurchmesser von 3mm ausgelegt. Er erstreckt sich in das vordere Teilstück 110 der Positionierhilfe ausgehend von der Außenseite 110f nur so tief hinein, wie dies für einen Eingriff von Schraube 115 und Innengewinde erforderlich ist. An den vorderen Längenabschnitt 113a schließt sich ein dünner Hohlkanal 113b als mittlerer Längenabschnitt (113b) an, der bis zur Teilstück-Innenbohrung 110a reicht. Dessen Innendurchmesser ist so ausgelegt, dass darin ein Kolben 116 mit einem Außendurchmesser von etwa 0,6mm axial beweglich in Richtung der Mittelachse 113d gelagert werden kann. Der hintere Längenabschnitt 113c erstreckt sich zwischen der Innenbohrung 110a und der Langloch-Aufnahme 111c. Er hat den gleichen Innendurchmesser wie der Hohlkanal 113b.

Die Blockpfeile 117 deuten an, dass die Schraube 115 und der Kolben 116 in jeweils eine der Querbohrungen eingesetzt werden. Der Kolben 116 hat eine Länge, die von der Schraube 115 bis nahe an die Primärrohr-Außenseite reicht. Durch Eindrehen der Schraube 115 in das Innengewinde im vorderen Längenabschnitt 113a der Querbohrungen 113 wird der axial bewegliche Kolben 116 innerhalb des Hohlkanals 113b in Richtung 116a auf das Primärrohr 3 verschoben. Der Kolben 116 kann so eine Kraft ausüben, die eine Bewegung des Primärrohres 3 entlang der Mittelachse 113d und damit gegen die Innenwand des Hüllrohres (2) bewirkt.

Die Querschnittsverminderung der Querbohrung 113 hat den Vorteil, dass der relativ großvolumige Gewindeabschnitt zur Aufnahme der Schraube 115 (im vorderen Längenabschnitt 113a) auf die Peripherie des Teilstücks 110 beschränkt werden kann, wo dafür ausreichend Materialvolumen zur Verfügung steht. Wohingegen durch den schmalen Grat zwischen benachbarten Primärrohr-Aufnahmen 111c lediglich der dünne Hohlkanal 113b verläuft.

Schraube 115 und Kolben 116 sind in diesem Ausführungsbeispiel als separate Bauteile ausgeführt. Alternativ dazu können diese Bauteile auch aus einem Stück gefertigt sein.

## Patentansprüche

1. Verfahren zur Herstellung einer antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl rohrförmiger Antiresonanzelement-Vorformlinge (kurz: ARE-Vorformlinge), die jeweils eine Rohr-Längsachse und eine Rohr-Außenmantelfläche aufweisen,
(c) Erstpositionierung der Vielzahl der ARE-Vorformlinge an peripheren Soll-Positionen der Hüllrohr-Innenseite mittels einer Positionierhilfe unter Bildung einer primären Vorform,
(d) thermisches Strecken der primären Vorform zu der Hohlkernfaser oder Weiterverarbeitung der primären Vorform zu einer sekundären Vorform, aus der die Hohlkernfaser gezogen wird,
**dadurch gekennzeichnet, dass** eine Positionierhilfe eingesetzt wird, die mit Justagemitteln ausgestattet ist, die eine gegenüber der Erstpositionierung geänderte Nachpositionierung von mindestens einem Teil der ARE-Vorformlinge ermöglichen.

2. Verfahrens nach Anspruch 1, **dadurch gekennzeichnet, dass** bei der Nachpositionierung der ARE-Vorformling in Richtung quer zu seiner Rohr-Längsachse verschoben wird.

3. Verfahren nach Anspruch 1 oder 2, **dadurch gekennzeichnet, dass** die Nachpositionierung durch eine auf den ARE-Vorformling einwirkende Kraft bewirkt wird, die eine senkrecht zur Hüllrohr-Längsachse und radial nach außen gerichtete Richtungskomponente umfasst.

4. Verfahren nach einem oder mehreren der vorhergehenden Ansprüche, **dadurch gekennzeichnet, dass** die Positionierhilfe eine Längsachse und eine Außenseite aufweist, und dass das Justagemittel eine Vielzahl von Aufnahmen umfasst, in die jeweils ein Ende des ARE-Vorformlings hineinragt oder durch die sich ein ARE-Vorformling erstreckt, und dass das Justagemittel Querbohrungen aufweist, die jeweils von der Außenseite der Positionierhilfe bis zu einer der Aufnahmen verlaufen und durch die hindurch sich ein Andrückelement zur Rohr-Außenmantelfläche erstreckt.

5. Verfahren nach Anspruch 4, **dadurch gekennzeichnet, dass** die Querbohrungen als Gewindebohrungen ausgebildet sind und dass mindestens einige davon die Positionierhilfe-Längsachse schneiden.

6. Verfahren nach Anspruch 3 oder 4, **dadurch gekennzeichnet, dass** die Aufnahmen einen ovalen Querschnitt oder einen Langloch-Querschnitt, mit einer langen Hauptachse und mit einer kurzen Hauptachse aufweisen, wobei die lange Hauptachse jeweils radial zur Positionierhilfe-Längsachse verläuft.

7. Verfahren nach einem oder mehreren der Ansprüche 4 bis 6, **dadurch gekennzeichnet, dass** die Positionierhilfe zur Positionierung einer Anzahl "n" von ARE-Vorformlingen ausgelegt ist, und dass sie im Querschnitt mindestens eine Flachseite hat, und vorzugsweise eine polygonale Außenkontur mit einer Anzahl "N" von Flachseiten aufweist, wobei gilt: N=n, oder N=2n, wenn "n" eine gerade Zahl ist, und wobei gilt: N=2n, wenn "n" eine ungerade Zahl größer 1 ist.

8. Verfahren nach einem oder mehreren der vorhergehenden Ansprüche, **dadurch gekennzeichnet, dass** bei einem verschachtelten ARE-Vorformling, der mehrere rohrförmige Ausgangskomponenten umfasst, eine Positionierhilfe eingesetzt wird, welche Justagemittel für die Nachpositionierung aller rohrförmigen Ausgangskomponenten des ARE-Vorformlings aufweist.

9. Verfahren nach einem oder mehreren der vorhergehenden Ansprüche, **dadurch gekennzeichnet, dass** die Positionierhilfe und das Hüllrohr axial voneinander beabstandet sind.

10. Verfahren zur Herstellung einer Vorform für eine antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres, das eine Hüllrohr-Innenbohrung mit einer Hüllrohr-Innenseite und eine Hüllrohr-Mittelachse aufweist,
(b) Bereitstellen einer Vielzahl rohrförmiger ARE-Vorformlinge, die jeweils eine Rohr-Längsachse und eine Rohr-Außenmantelfläche aufweisen,
(c) Erstpositionierung der Vielzahl der ARE-Vorformlinge an peripheren Soll-Positionen der Hüllrohr-Innenseite mittels einer Positionierhilfe unter Bildung einer primären Vorform,
(d) optionale Weiterverarbeitung der primären Vorform zu einer sekundären Vorform,
**dadurch gekennzeichnet, dass** eine Positionierhilfe eingesetzt wird, die mit Justagemitteln ausgestattet ist, die eine gegenüber der Erstpositionierung geänderte Nachpositionierung von mindestens einem Teil der ARE-Vorformlinge ermöglichen.

11. Positionierhilfe für den Einsatz bei der Herstellung einer antiresonanten Hohlkernfaser oder einer Vorform für eine antiresonante Hohlkernfaser, die mindestens ein erstes Justagemittel für eine Erstpositionierung mindestens eines Innenrohres an einer Innenseite mindestens eines Außenrohres aufweist, **dadurch gekennzeichnet, dass** die Positionierhilfe mit mindestens einem zweiten Justagemittel ausgestattet ist, das eine gegenüber der Erstpositionierung geänderte Nachpositionierung des mindestens einen Innenrohres ermöglicht.

12. Positionierhilfe nach Anspruch 11, **dadurch gekennzeichnet, dass** die Positionierhilfe eine Längsachse und eine Außenseite aufweist, und dass das mindestens eine erste Justagemittel eine Aufnahme für das Innenrohr umfasst, und dass das mindestens eine zweite Justagemittel eine Querbohrung aufweist, die von der Außenseite der Positionierhilfe bis zu der Aufnahme verläuft und durch die hindurch sich ein Andrückelement erstreckt.

13. Positionierhilfe nach Anspruch 12, **dadurch gekennzeichnet, dass** die Querbohrung als Gewindebohrung ausgebildet ist und dass sie die Positionierhilfe-Längsachse schneidet.

14. Positionierhilfe nach Anspruch 12 oder 13, **dadurch gekennzeichnet, dass** die Aufnahme einen ovalen Querschnitt oder einen Langloch-Querschnitt mit einer langen Hauptachse und mit einer kurzen Hauptachse aufweist, wobei die lange Hauptachse radial zur Positionierhilfe-Längsachse verläuft.

15. Positionierhilfe nach einem oder mehreren der Ansprüche 12 bis 14, **dadurch gekennzeichnet, dass** die Positionierhilfe zur Positionierung einer Anzahl "n" von ARE-Vorformlingen an der Innenseite eines Hüllrohres ausgelegt ist, und dass sie im Querschnitt mindestens eine Flachseite hat, und vorzugsweise eine polygonale Außenkontur mit einer Anzahl "N" von Flachseiten aufweist, wobei gilt: N=n oder N=2n, wenn "n" eine gerade Zahl ist, und wobei gilt: N=2n, wenn "n" eine ungerade Zahl größer 1 ist.
